# EUROPÄISCHE PATENTSCHRIFT

(11) **EP 3 108 732 B1**
(45) Veröffentlichungstag und Bekanntmachung des Hinweises auf die Patenterteilung: **07.03.2018**
(21) Anmeldenummer: 16401032.4
(22) Anmeldetag: 26.05.2016
(51) Int. Cl.: A01C 7/04, A01C 7/08

(54) **VORRICHTUNG ZUM FÖRDERN VON AUF EINER LANDWIRTSCHAFTLICHEN FLÄCHE AUSZUBRINGENDEM GRANULAREM MATERIAL MIT REDUZIERTEM FÖRDERDRUCK**
DEVICE FOR CONVEYING GRANULAR MATERIAL ONTO AN AGRICULTURAL SURFACE WITH REDUCED DISCHARGE PRESSURE
DISPOSITIF POUR TRANSPORTER GRANULAIRE SUR UNE SURFACE AGRICOLE AVEC PRESSION DE REFOULEMENT RÉDUITE

(30) Priorität: 23.06.2015 DE 102015110008
(43) Veröffentlichungstag der Anmeldung: 28.12.2016
(73) Patentinhaber: Amazonen-Werke H. Dreyer GmbH & Co. KG, 49205 Hasbergen (DE)
(72) Erfinder: Wien, Thomas, 28816 Stuhr (DE)

(56) Entgegenhaltungen:
- EP-A1- 0 620 963
- EP-A2- 0 369 766
- EP-B1- 2 298 056
- WO-A1-2011/002541
- WO-A1-2013/180619
- US-A- 3 715 057

## Beschreibung

Die vorliegende Erfindung betrifft eine Vorrichtung zum Fördern von auf einer landwirtschaftlichen Fläche auszubringendem granularem Material.

Derartige Vorrichtungen finden beispielsweise in Einzelkornsämaschinen Anwendung, um Saatgut, welches in einem zentralen Saatgutvorratsbehälter angeordnet ist, zu den einzelnen Vereinzelungsgehäusen zu transportieren. Eine solche Vorrichtung ist beispielsweise aus der EP 2 298 056 B1, der EP 2 591 656 und der WO 2013/180619 A1 bekannt. Bei den bekannten Systemen wird Saatgut in die Vereinzelungsgehäuse geleitet, das sich dort zunächst in separaten Vorratsbereichen sammelt, bevor es durch die mit einer Druckdifferenz beaufschlagten Vereinzelungstrommel oder Vereinzelungsscheibe vereinzelt und zum Ausbringen auf dem Feld an entsprechende Säschare weitergeleitet wird.

Um diese Förderung des Saatguts in die Vereinzelungsgehäuse zu ermöglichen ist ein entsprechend dimensioniertes Gebläse erforderlich. Auch darf der Luftdruck im Vorratsbereich des Vereinzelungsgehäuses nicht unter dem Vereinzelungsluftdruck liegen, da sonst ein Luftstrom durch das Saatgut entsteht, der die Körner weg von der Vereinzelungstrommel oder Vereinzelungsscheibe führt, sodass es zu Fehlstellen kommt.

Bei bekannten Systemen ist es daher erforderlich, dass der Luftdruck, der durch das Gebläse bereitgestellt wird, etwa 40 mbar über dem Vereinzelungsdruck liegen muss.

Durch die EP22 98 056 B1 ist eine Vorrichtung gemäß des Oberbegriffes des Anspruches 1 bekannt.

Aufgabe der vorliegenden Erfindung ist es, die pneumatische Energiebilanz zu verbessern und insbesondere den benötigten Luftdruck zur Förderung des granularen Materials vom Vorratsbehälter zur Vereinzelungseinrichtung zu reduzieren. Diese Aufgabe wird durch eine Vorrichtung gemäß Patentanspruch 1 gelöst. Weitere vorteilhafte Ausgestaltungen der Erfindung sind in den abhängigen Unteransprüchen angegeben.

Gemäß der Erfindung ist es also vorgesehen, dass neben dem pneumatischen Förderkanal wenigstens ein weiterer Luftkanal in die Vereinzelungseinrichtung mündet und die über den wenigstens einen Luftkanal einströmende Luft so gerichtet ist und mit einer solchen Geschwindigkeit versehen wird, dass der Luftdruck (dynamischer Druck) in der Vereinzelungseinrichtung im Bereich der Mündung des pneumatischen Förderkanals in die Vereinzelungseinrichtung reduziert wird. Dadurch muss das Fördern des granularen Materials vom Vorratsbehälter zur Vereinzelungseinrichtung nicht gegen den Vereinzelungsdruck arbeiten, sondern gegen einen niedrigeren Luftdruck, wodurch der Luftdruck, der zum Fördern des granularen Materials bereitgestellt werden muss reduziert werden kann. Dies verbessert die pneumatische Energiebilanz der Vorrichtung.

Bei der Vorrichtung kann es sich insbesondere um ein Nachfüllsystem für eine Vereinzelungseinrichtung einer landwirtschaftlichen Einzelkornsämaschine handeln. Ein derartiges Nachfüllsystem wird auch als "Nursingsystem" bezeichnet.

Bei dem Vorratsbehälter kann es sich insbesondere um einen zentralen Vorratsbehälter handeln, von dem aus granulares Material an die Vereinzelungseinrichtung förderbar ist. Es können auch mehrere Vereinzelungseinrichtungen vorgesehen sein. In diesem Fall kann der Vorratsbehälter mit jeder der Vereinzelungsvorrichtungen über einen separaten pneumatischen Förderkanal zum pneumatischen Fördern von granularem Material an die jeweilige Vereinzelungseinrichtung verbunden sein. Der Vorratsbehälter kann insbesondere eine sogenannte Nursingkammer umfassen oder mit einer solchen verbunden sein, über die das granulare Material in den pneumatischen Förderkanal einspeisbar ist.

Bei dem granularen Material kann es sich insbesondere um Saatgut handeln, alternativ oder zusätzlich jedoch auch um Düngemittel oder Pestizid.

Die Vereinzelungseinrichtung kann insbesondere ein mit einem Überdruck beaufschlagtes Vereinzelungsgehäuse umfassen. Das Vereinzelungsgehäuse kann einen dezentralen Sammelbehälter für das über den pneumatischen Förderkanal zugeführte granulare Material umfassen. Der pneumatische Förderkanal kann dabei in das Vereinzelungsgehäuse, insbesondere in den dezentralen Sammelbehälter münden.

Der pneumatische Förderkanal kann insbesondere in das Vereinzelungsgehäuse, insbesondere in den dezentralen Sammelbehälter, hineinreichen. Mit anderen Worten kann die Mündung des pneumatischen Förderkanals im Inneren des Vereinzelungsgehäuses, insbesondere im Inneren des dezentralen Sammelbehälters, angeordnet sein.

Die Vereinzelungseinrichtung kann zumindest eine mit einer Druckdifferenz beaufschlagbare Vereinzelungstrommel oder Vereinzelungsscheibe umfassen. Eine Vereinzelungstrommel oder Vereinzelungsscheibe kann insbesondere in Perforationsreihen angeordnete Perforationen aufweisen. An diesen Perforationen kann sich das granulare Material anlagern, wodurch es zu einer Vereinzelung kommt.

Die Vorrichtung kann außerdem ein Gebläse zum Einbringen von Luft in den pneumatischen Förderkanal umfassen. Mit Hilfe des Gebläses kann insbesondere im pneumatischen Förderkanal ein entsprechender Förderluftstrom erzeugt werden, mit dem das granulare Material pneumatisch gefördert werden kann. Durch das Gebläse kann im pneumatischen Förderkanal insbesondere ein Überdruck gegenüber dem Atmosphärendruck erzeugt werden.

Der pneumatische Förderkanal und der wenigstens eine Luftkanal münden, insbesondere innerhalb der Vereinzelungseinrichtung, in einen Zuführkanal der Vereinzelungseinrichtung, wobei der Zuführkanal zu einer Vereinzelungstrommel oder Vereinzelungsscheibe führt. Durch das Vorsehen eines entsprechenden Zuführkanals ist eine gezielte Zuführung des granularen Materials zur Vereinzelungstrommel oder Vereinzelungsscheibe möglich.

Der Zuführkanal umfasst einen Abschnitt, der mehrere Entlüftungsbohrungen aufweist, über die Luft aus dem Zuführkanal in einen umgebenden Behälter der Vereinzelungseinrichtung strömen kann. Der umgebende Behälter kann insbesondere dem oben angesprochenen dezentralen Sammelbehälter entsprechen.

Der Behälter kann über eine Luftleitung mit einem Gehäuse der Vereinzelungstrommel oder Vereinzelungsscheibe verbunden sein. Durch diese Maßnahme ist es möglich, dass Luft, welche zur Förderung des granularen Materials zur Vereinzelungseinrichtung verwendet wurde, wenigstens teilweise für den Betrieb der Vereinzelung zu nutzen. Dadurch kann die pneumatische Energiebilanz weiter verbessert werden. Der Abschnitt, der mehrere Entlüftungsbohrungen aufweist, kann insbesondere als "Nursingsieb" bezeichnet werden.

Das Vereinzelungsgehäuse kann also zwei Kammern umfassen, wobei eine Kammer dem dezentralen Sammelbehälter und eine weitere Kammer dem Gehäuse der Vereinzelungstrommel oder Vereinzelungsscheibe entspricht. Die beiden Kammern können durch den Zuführkanal und die beschriebene Luftleitung miteinander verbunden sein. Im Übrigen können die Kammern voneinander getrennt sein.

Das Innere des Zuführkanals ist über wenigstens einen Verbindungskanal mit dem Inneren des umgebenden Behälters, insbesondere des dezentralen Sammelbehälters, verbunden, wobei der wenigstens eine Verbindungskanal stromaufwärts des Abschnitts, der mehrere Entlüftungsbohrungen aufweist, angeordnet ist. Durch diese Maßnahme ist es möglich, dass Abluft aus dem pneumatischen Förderkanal und dem wenigstens einen Luftkanal auch dann bei der Vereinzelung genutzt werden kann, wenn die Entlüftungsbohrungen durch granulares Material verschlossen werden. In diesem Fall strömt Luft aus dem wenigstens einen Luftkanal über den wenigstens einen Verbindungskanal in das Innere des umgebenden Behälters und dann über die Luftleitung zum Gehäuse der Vereinzelungstrommel oder Vereinzelungsscheibe.

Insbesondere wenn der Zuführkanal derart mit granularem Material befüllt ist, dass das granulare Material bis zur Mündung des pneumatischen Förderkanals reicht, kann der Druck im Bereich der Mündung des pneumatischen Förderkanals dann nicht mehr reduziert werden, da die Luft aus dem wenigstens einen Luftkanal in den Verbindungskanal umgeleitet wird. Damit stoppt auch die Förderung von granularem Material vom Vorratsbehälter zur Vereinzelungseinrichtung. Erst wenn das granulare Material im Zuführkanal soweit reduziert wurde, dass die Luftströmung aus dem wenigstens einen Luftkanal wieder wenigstens teilweise in Richtung der über den pneumatischen Förderkanal einströmenden Luft und mit einer höheren Geschwindigkeit als über den pneumatischen Förderkanal in die Vereinzelungseinrichtung strömen kann, kann der Luftdruck im Bereich der Mündung des pneumatischen Förderkanals wieder reduziert werden, sodass ein Fördern des granularen Materials vom Vorratsbehälter zur Vereinzelungseinrichtung wieder ermöglicht wird.

Der wenigstens eine Luftkanal kann ebenfalls von dem Gebläse mit Luft gespeist werden. Es ist also nicht erforderlich, ein separates Gebläse für den wenigstens einen Luftkanal vorzusehen.

Der wenigstens eine Luftkanal kann insbesondere vom pneumatischen Förderkanal abzweigen, insbesondere vor dem Vorratsbehälter, also stromaufwärts des Vorratsbehälters. Durch diese Maßnahme ist es nicht erforderlich, ein Sieb oder ähnliches Element vorzusehen, welches den Durchtritt von granularem Material in den wenigstens einen Luftkanal vermeidet. Ein derartiges Sieb oder ähnliches Element kann jedoch vorgesehen sein, wenn der wenigstens eine Luftkanal in einer alternativen Ausführung nach dem Vorratsbehälter, also stromabwärts des Vorratsbehälter, von dem pneumatischen Förderkanal abzweigt.

Der wenigstens eine Luftkanal kann im Bereich der Mündung in die Vereinzelungseinrichtung einen Injektor/Ejektor, insbesondere eine Düse, umfassen. Durch diesen Injektor/Ejektor, insbesondere durch die Düse, kann eine Vergrößerung der Luftströmungsgeschwindigkeit erreicht werden, welche die Verringerung des Luftdrucks stromabwärts der Mündung des pneumatischen Förderkanals ermöglicht.

Der Injektor/Ejektor, insbesondere die Düse, kann durch eine Querschnittsverringerung des wenigstens einen Luftkanals gebildet werden. Dadurch ist eine besonders kostengünstige Ausführung möglich.

Im wenigstens einen Luftkanal kann ein Drosselventil zum Einstellen des Druckniveaus vorgesehen sein. Ebenso ist es möglich, eine Drosselventil in der Luftleitung vorzusehen, die den Behälter der Vereinzelungseinrichtung mit dem Gehäuse der Vereinzelungstrommel oder Vereinzelungsscheibe verbindet.

Die oben genannte Vorrichtung kann insbesondere Teil eines landwirtschaftlichen Geräts zum Ausbringen von granularem Material auf einer landwirtschaftlichen Fläche sein. Bei dem landwirtschaftlichen Gerät kann es sich insbesondere um eine Einzelkornsämaschine handeln. Mit anderen Worten stellt die Erfindung außerdem eine Einzelkornsämaschine bereit, welche eine der oben genannten Vorrichtungen umfasst.

Die Erfindung stellt außerdem ein Verfahren zum Fördern von auf einer landwirtschaftlichen Fläche auszubringendem granularem Material bereit, umfassend:
Fördern des auszubringenden granularen Materials von einem Vorratsbehälter für das granulare Material zu einer Vereinzelungseinrichtung über einen pneumatischen Förderkanal,
wobei im Bereich der Mündung des pneumatischen Förderkanals in die Vereinzelungseinrichtung Luft über wenigstens einen Luftkanal in die Vereinzelungseinrichtung eingebracht wird,
und wobei die über den wenigstens einen Luftkanal einströmende Luft wenigstens teilweise in Richtung der über den pneumatischen Förderkanal einströmenden Luft gerichtet ist und eine höhere Geschwindigkeit aufweist als die über den pneumatischen Förderkanal in der Vereinzelungseinrichtung einströmende Luft, sodass der Luftdruck in der Vereinzelungseinrichtung im Bereich der Mündung des pneumatischen Förderkanals in die Vereinzelungseinrichtung reduziert wird.

Das Verfahren kann insbesondere mit einer oben beschriebenen Vorrichtung durchgeführt werden. Das Verfahren kann daher insbesondere auch ein Bereitstellen einer oben genannten Vorrichtung oder eines oben genannten landwirtschaftlichen Geräts umfassen.

Weitere Merkmale und Vorteile der Erfindung werden nachfolgend anhand der beispielhaften Figuren erläutert. Dabei zeigt:
- Figur 1: eine schematische Darstellung einer erfindungsgemäßen Vorrichtung in einem ersten Betriebszustand; und
- Figur 2: eine schematische Darstellung der erfindungsgemäßen Vorrichtung nach Figur 1 in einem zweiten Betriebszustand.

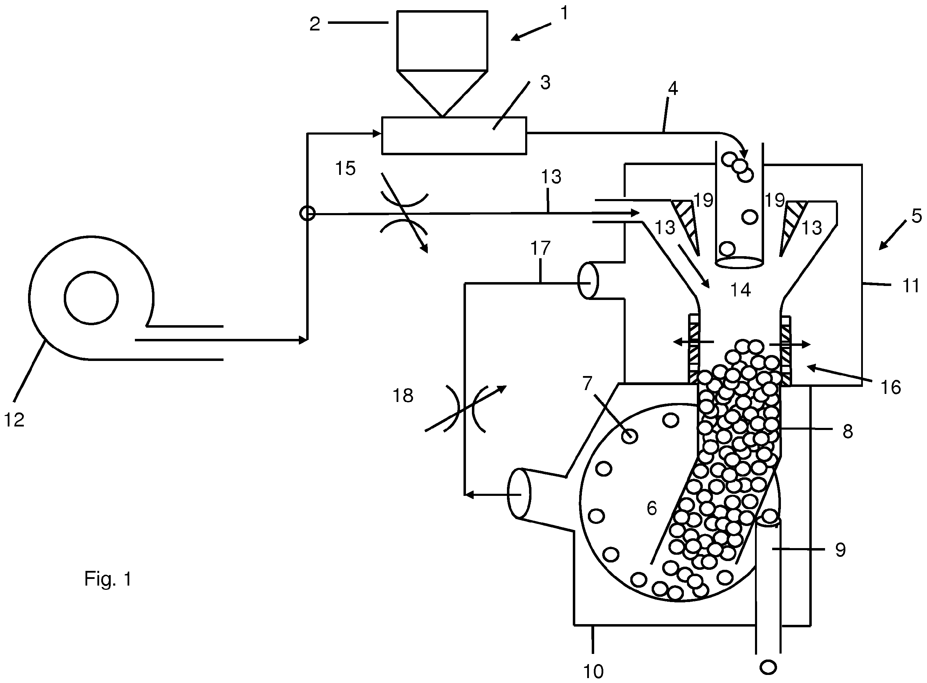

Figur 1 zeigt schematisch ein Beispiel einer Vorrichtung zum Fördern von auf einer landwirtschaftlichen Fläche auszubringendem granularem Material. Die Vorrichtung umfasst dabei einen Vorratsbehälter 1 für das auszubringende granulare Material. Der Vorratsbehälter 1 umfasst dabei zwei Elemente, nämlich ein Vorratsreservoir 2 und eine Einspeiseeinrichtung 3. Die Einspeiseeinrichtung 3, auch Nursingkammer genannt, dient dazu, granulares Material aus dem Reservoir 2 in den pneumatischen Förderkanal 4 einzuspeisen.

Bei dem granularen Material kann es sich insbesondere um Saatgut, alternativ jedoch auch um granularen Dünger oder granulare Pestizide handeln.

Außerdem ist eine Vereinzelungseinrichtung 5 vorgesehen, welche eine mit einer Druckdifferenz beaufschlagbare Vereinzelungsscheibe 6 umfasst, welche in Perforationsreihen angeordnete Perforationen 7 aufweist. An diesen Perforationen können sich Körner des granularen Materials anlagern, wenn sich die Perforationen durch einen Zuführbereich eines Zuführkanals 8 für das granulare Material bewegen.

Die Vereinzelungsscheibe 6 dreht sich, sodass die an den Perforationen 7 anhaftenden Körner sequenziell an einer Abgabeeinrichtung 9 vorbeigeführt werden, wo sie sich von der Vereisungstrommel 6 lösen und an entsprechende Abgabeelemente weitergeleitet werden. Bei diesen Abgabeelementen, hier nicht dargestellt, kann es sich beispielsweise um Säschare einer Einzelkornsämaschine handeln.

Die Vereinzelungsscheibe 6 ist von einem Gehäuse 10 umgeben, in dem ein entsprechender Überdruck gegenüber dem Atmosphärendruck herstellbar ist.

Der Zuführkanal 8 erstreckt sich auch in einen dezentralen Sammelbehälter 11, der in diesem Beispiel über dem Gehäuse 10 der Vereinzelungsscheibe 6 angeordnet ist. Der Zuführkanal 8 verbindet das Innere des dezentralen Sammelbehälter 11 und des Gehäuse 10 der Vereinzelungsscheibe 6.

Anstelle der Vereinzelungsscheibe 6 könnte auch eine Vereinzelungstrommel Anwendung finden.

Figur 1 zeigt außerdem ein Gebläse 12, welches ebenso wie der Vorratsbehälter 1 mit dem pneumatischen Förderkanal 4 verbunden ist. Mit dem Gebläse 12 kann im pneumatischen Förderkanal 4 ein Förderluftstrom gebildet werden, welcher das granulare Material vom Vorratsbehälter 1 zur Vereinzelungseinrichtung 5 fördert. Der pneumatische Förderkanal 4, hier nur schematisch dargestellt, mündet dabei in den dezentralen Sammelbehälter 11 der Vereinzelungseinrichtung 5. Durch das Gebläse 12 wird im pneumatischen Förderkanal 4 ein Luftüberdruck gegenüber dem Atmosphärendruck erzeugt.

In den dezentralen Sammelbehälter 11 der Vereinzelungseinrichtung 5 mündet auch ein Luftkanal 13, die in diesem Ausführungsbeispiel stromaufwärts des Vorratsbehälter 1 vom pneumatischen Förderkanal 4 abzweigt und somit auch durch das Gebläse 12 mit Luft beaufschlagt wird. Der Luftkanal 13 bildet somit eine Bypassleitung zum pneumatischen Förderkanal 4.

Innerhalb des dezentralen Sammelbehälters 11 ist der Luftkanal 13 in diesem Beispiel trichterförmig ausgebildet und mit seiner Mündung auf einen Mündungsbereich 14 des pneumatischen Förderkanals 4 gerichtet. Der Zielbereich 14 ist stromabwärts der Mündung des pneumatischen Förderkanals 4 und somit im Inneren des Zuführkanals 8 angeordnet. In diesem Bereich 14 strömt die Luft aus dem pneumatischen Förderkanal 4 in diesem Beispiel im Wesentlichen senkrecht nach unten in Richtung der Vereinzelungsscheibe 6. Die über den Luftkanal 13 einströmende Luft weist wenigstens eine Komponente auf, welche in dieselbe Richtung gerichtet ist, wie die über den pneumatischen Förderkanal 4 einströmende Luft, also in Richtung der Vereinzelungsscheibe 6 gerichtet.

Durch den zur Mündung hin verringerten Querschnitt der Leitung 13 wird eine Beschleunigung der Luft erreicht, die über den Luftkanal 13 in den Bereich 14 einströmt und zwar insbesondere derart, dass die Strömungsgeschwindigkeit der Luft aus dem Luftkanal 13 in Richtung der Vereinzelungsscheibe 6 höher ist, als die Strömungsgeschwindigkeit der Luft, welche über den pneumatischen Förderkanal 4 in den Bereich 14 und in Richtung der Vereinzelungsscheibe 6 einströmt. Dadurch wird der Luftdruck, insbesondere der dynamische Luftdruck, im Bereich 14 stromabwärts der Mündung des pneumatischen Förderkanals 4 reduziert. Diese Reduzierung des Luftdrucks im Bereich 14 führt dazu, dass ein geringerer Förderdruck im pneumatischen Förderkanal 4 erforderlich ist, da durch den geringeren Druck im Bereich 14 granulares Material gewissermaßen angesaugt wird. Die Vorrichtung gestattet daher eine Verbesserung der pneumatischen Energiebilanz. Mit anderen Worten kann das Gebläse 12 mit geringerer Leistung betrieben oder kleiner dimensioniert werden.

Im Luftkanal 13 kann ein Drosselventil 15 vorgesehen sein, um das Druckniveau innerhalb des Luftkanals 13 einzustellen.

In Figur 1 ist außerdem ein Abschnitt 16 des Zuführkanals 8 ersichtlich, in dem mehrere Entlüftungsbohrungen vorgesehen sind. Dieser Abschnitt 16 kann auch als Nursingsieb bezeichnet werden. Solange der Zuführkanal 8 nicht entsprechend gefüllt ist, kann Nursingabluft, also Luft aus dem pneumatischen Zuführkanal 4 und dem Luftkanal 13 über die Entlüftungsbohrungen im Abschnitt 16 aus dem Zuführkanal 8 entweichen und in einen umgebenden Bereich des dezentralen Sammelbehälters 11 strömen. Von dort aus gelangt die Abluft über eine Luftleitung 17, hier nur schematisch dargestellt, zum Gehäuse 10 der Vereinzelungsscheibe 6. Die Abluft, die zum Fördern des granularen Materials vom Vorratsbehälter 1 zur Vereinzelungseinrichtung 5 verwendet wird, kann daher wenigstens teilweise zur Vereinzelung im Gehäuse 10 genutzt werden, also zur Erzeugung eines Überdrucks im Gehäuse 10. Dadurch kann die pneumatische Energiebilanz weiter erhöht werden.

Innerhalb der Luftleitung 17 kann wiederum ein Drosselventil 18 vorgesehen sein, um das Druckniveau innerhalb der Luftleitung 17 zu variieren.

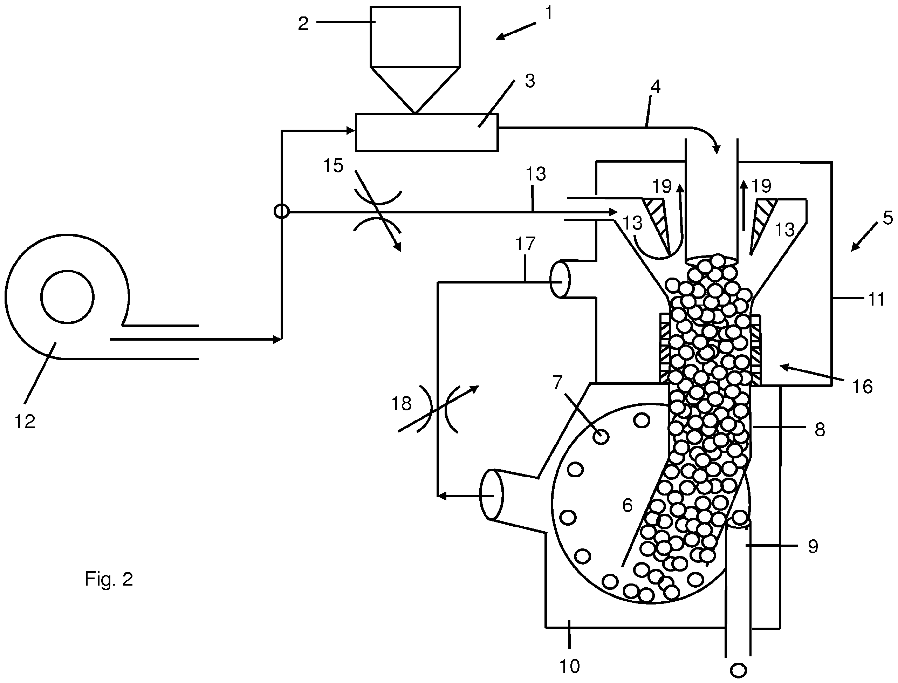

Wenn mehr granulares Material zur Vereinzelungseinrichtung 5 gefördert wird, kommt es dazu, dass der Abschnitt 16 durch granulares Material verschlossen wird und somit keine Luft mehr über die Entlüftungsbohrungen im Abschnitt 16 entweichen kann. Diese Situation ist in Figur 2 dargestellt. Das granulare Material reicht dann bis in den Bereich 14 stromabwärts der Mündung des pneumatischen Zuführkanals 4.

Es ist in der Vorrichtung gemäß den Figuren daher ein weiterer Verbindungskanal 19 vorgesehen, hier in Form eines zum Förderkanal 4 konzentrischen Ringkanals, welcher das Innere des Zuführkanals 8 mit dem Inneren des umgebenden Sammelbehälters 11 verbindet. Wenn der Zuführkanal 8 einen Füllstand wie in Figur 2 gezeigt erreicht hat, wird die über den Luftkanal 13 eingebrachte Luft in den Verbindungskanal 19 umgeleitet und entweicht so aus dem Bereich des Zuführkanals 8. Über die Luftleitung 17 kann diese Luft dann wiederum zur Vereinzelung genutzt werden.

Durch die Umlenkung des Luftstroms aus dem Luftkanal 13 kann jedoch der Druck im Bereich 14 stromabwärts der Mündung des pneumatischen Förderkanals 4 nicht mehr reduziert werden, sodass die Voraussetzungen für ein Fördern von granularem Material vom Vorratsbehälter 1 zur Vereinzelungseinrichtung 5 nicht mehr gegeben sind, der Luftstrom im pneumatischen Förderkanal 4 also nicht mehr ausreicht. Die Nachförderung von granularem Material in die Vereinzelungseinrichtung 5 wird daher unterbrochen. Dies setzt natürlich voraus, dass die Leistung des Gebläses 12 so weit reduziert wurde, dass eine Förderung von granularem Material im pneumatischen Förderkanal 4 vom Vorratsbehälter 1 zur Vereinzelungseinrichtung 5 nur dann möglich ist, wenn der Druck im Bereich 14 aufgrund der einströmenden Luft aus dem Luftkanal 13 reduziert wird.

Ein weiterer Vorteil der oben genannten Ausbildungsform ist es, dass Nursingabluft nicht in die Umgebung abgeführt wird, sondern zum Betrieb der Vereinzelung genutzt wird.

Die gezeigte Vorrichtung kann insbesondere Teil einer Einzelkornsämaschine sein. Diese kann neben den hier gezeigten Elementen noch weitere Elemente aufweisen, um das granulare Material auf einer landwirtschaftlichen Fläche ausbringen zu können.

Es versteht sich, dass die Geometrie des Luftkanals 13 und auch des Verbindungskanals 19 nicht auf die in den Abbildungen gezeigte Geometrie beschränkt ist. Der Luftkanal 13 könnte auch andere Elemente umfassen, welche eine Erhöhung der Strömungsgeschwindigkeit im Bereich 14 ermöglicht, beispielsweise andere Formen von Düsen. Auch könnten der Luftkanal 13 und der Verbindungskanal 19 vertauscht sein, also der Mündungsbereich des Luftkanals 13 innerhalb des Sammelbehälters 11 so ausgebildet und angeordnet sein, wie es in den Figuren 1 und 2 der Verbindungskanal 19 ist, und umgekehrt. Die gezeigten Kanäle bzw. Luftleitungen können aus einen oder mehreren miteinander verbundenen Rohren bestehen, die typischerweise zylindrisch ausgebildet sind, aber auch andere Geometrien aufweisenkönnen.

## Patentansprüche

1. Vorrichtung zum Fördern von auf einer landwirtschaftlichen Fläche auszubringendem granularem Material, umfassend:
einen Vorratsbehälter (1) für das granulare Material;
eine Vereinzelungseinrichtung (5); und
einen pneumatischen Förderkanal (4) zum pneumatischen Fördern von granularem Material vom Vorratsbehälter (1) zur Vereinzelungseinrichtung (5); wobei im Bereich (14) der Mündung des pneumatischen Förderkanals (4) in die Vereinzelungseinrichtung (5) wenigstens ein Luftkanal (13) in die Vereinzelungseinrichtung (5) mündet,
wobei die Vorrichtung so ausgebildet ist, dass über den wenigstens einen Luftkanal (13) Luft wenigstens teilweise in Richtung der über den pneumatischen Förderkanal (4) einströmenden Luft und mit einer höheren Geschwindigkeit als über den pneumatischen Förderkanal (4) in die Vereinzelungseinrichtung (5) einbringbar ist, sodass der Luftdruck in der Vereinzelungseinrichtung (5) im Bereich (14) der Mündung des pneumatischen Förderkanals (4) in die Vereinzelungseinrichtung (5) reduziert werden kann, **dadurch gekennzeichnet, dass** der pneumatische Förderkanal (4) und der wenigstens eine Luftkanal (13) in einen Zuführkanal (8) der Vereinzelungseinrichtung (5) münden, wobei der Zuführkanal (8) zu einer Vereinzelungstrommel oder Vereinzelungsscheibe (6) führt, dass der Zuführkanal (8) einen Abschnitt (16) umfasst, der mehrere Entlüftungsbohrungen aufweist, über die Luft aus dem Zuführkanal (8) in einen umgebenden Behälter (11) der Vereinzelungseinrichtung (5) strömen kann, und dass das Innere des Zuführkanals (8) über wenigstens einen Verbindungskanal (19) mit dem Inneren des umgebenden Behälters (11) verbunden ist, wobei der wenigstens eine Verbindungskanal (19) stromaufwärts des Abschnitts (16), der mehrere Entlüftungsbohrungen aufweist, angeordnet ist.

2. Vorrichtung nach Anspruch 1, außerdem umfassend ein Gebläse (12) zum Einbringen von Luft in den pneumatischen Förderkanal (4), wobei der wenigstens eine Luftkanal (13) ebenfalls von dem Gebläse (12) mit Luft gespeist wird.

3. Vorrichtung nach Anspruch 2, wobei der wenigstens eine Luftkanal (13) vor dem Vorratsbehälter (1) von dem pneumatischen Förderkanal (4) abzweigt.

4. Vorrichtung nach einem der vorangegangenen Ansprüche, wobei der wenigstens eine Luftkanal (13) im Bereich der Mündung in die Vereinzelungseinrichtung (5) eine Düse umfasst.

5. Vorrichtung nach Anspruch 4, wobei die Düse durch eine Querschnittsverringerung des wenigstens einen Luftkanals (13) gebildet wird.

6. Vorrichtung nach Anspruch 1, wobei der Behälter (11) über eine Luftleitung (17) mit einem Gehäuse (10) der Vereinzelungstrommel oder Vereinzelungsscheibe (6) verbunden ist.

7. Einzelkornsämaschine umfassend eine Vorrichtung nach einem der vorangegangenen Ansprüche.

## Claims

1. Apparatus for delivering granular material to be dispensed on an agricultural area, comprising:
a storage container (1) for the granular material;
a singling device (5); and
a pneumatic delivery duct (4) for pneumatically delivering granular material from the storage container (1) to the singling device (5); wherein, in the region (14) in which the pneumatic delivery duct (4) opens into the singling device (5), at least one air duct (13) opens into the singling device (5),
wherein the apparatus is configured such that, via the at least one air duct (13), air is able to be introduced into the singling device (5) at least partially in the direction of the air flowing in via the pneumatic delivery duct (4) and at a greater speed than via the pneumatic delivery duct (4), such that the air pressure in the singling device (5) can be reduced in the region (14) in which the pneumatic delivery duct (4) opens into the singling device (5), **characterized in that** the pneumatic delivery duct (4) and the at least one air duct (13) open into a feed duct (8) of the singling device (5), wherein the feed duct (8) leads to a singling drum or singling disc (6), **in that** the feed duct (8) comprises a portion (16) which has a plurality of vent holes, via which air can flow out of the feed duct (8) into a surrounding container (11) of the singling device (5), and **in that** the interior of the feed duct (8) is connected to the interior of the surrounding container (11) via at least one connecting duct (19), wherein the at least one connecting duct (19) is arranged upstream of the portion (16) which has a plurality of vent holes.

2. Apparatus according to Claim 1, also comprising a fan (12) for introducing air into the pneumatic delivery duct (4), wherein the at least one air duct (13) is likewise supplied with air by the fan (12) .

3. Apparatus according to Claim 2, wherein the at least one air duct (13) branches off from the pneumatic delivery duct (4) upstream of the storage container (1).

4. Apparatus according to one of the preceding claims, wherein the at least one air duct (13) comprises a nozzle in the region of the opening into the singling device (5).

5. Apparatus according to Claim 4, wherein the nozzle is formed by a reduced cross section of the at least one air duct (13).

6. Apparatus according to Claim 1, wherein the container (11) is connected to a housing (10) of the singling drum or singling disc (6) via an air line (17).

7. Single grain seed drill comprising an apparatus according to one of the preceding claims.

## Revendications

1. Dispositif pour le transport de matière granulaire à distribuer sur une surface agricole, comprenant:
un réservoir de stockage (1) pour la matière granulaire;
un dispositif de désagrégation (5); et
un canal de transport pneumatique (4) pour le transport pneumatique de matière granulaire du réservoir de stockage (1) au dispositif de désagrégation (5); dans lequel au moins un canal d'air (13) débouche dans le dispositif de désagrégation (5) dans la région (14) de l'embouchure du canal de transport pneumatique (4) dans le dispositif de désagrégation (5),
dans lequel le dispositif est configuré de telle manière que de l'air puisse être introduit dans le dispositif de désagrégation (5) par ledit au moins un canal d'air (13) au moins partiellement dans la direction de l'air pénétrant par le canal de transport pneumatique (4) et avec une vitesse plus élevée que par le canal de transport pneumatique (4), de telle manière que la pression d'air dans le dispositif de désagrégation (5) puisse être réduite dans la région (14) de l'embouchure du canal de transport pneumatique (4) dans le dispositif de désagrégation (5), **caractérisé en ce que** le canal de transport pneumatique (4) et ledit au moins un canal d'air (13) débouchent dans un canal d'alimentation (8) du dispositif de désagrégation (5), dans lequel le canal d'alimentation (8) conduit à un tambour de désagrégation ou un disque de désagrégation (6), **en ce que** le canal d'alimentation (8) comprend une partie (16), qui présente plusieurs trous d'évent par lesquels l'air peut s'écouler hors du canal d'alimentation (8) dans un réservoir d'enceinte (11) du dispositif de désagrégation (5), et **en ce que** l'intérieur du canal d'alimentation (8) est relié par au moins un canal de liaison (19) à l'intérieur du réservoir d'enceinte (11), dans lequel ledit au moins un canal de liaison (19) est disposé en amont de la partie (16), qui présente plusieurs trous d'évent.

2. Dispositif selon la revendication 1, comprenant en outre une soufflante (12) pour introduire de l'air dans le canal de transport pneumatique (4), dans lequel ledit au moins un canal d'air (13) est également alimenté en air par la soufflante (12).

3. Dispositif selon la revendication 2, dans lequel ledit au moins un canal d'air (13) part du canal de transport pneumatique (4) avant le réservoir de stockage (1).

4. Dispositif selon l'une quelconque des revendications précédentes, dans lequel ledit au moins un canal d'air (13) comprend une buse dans la région de l'embouchure dans le dispositif de désagrégation (5).

5. Dispositif selon la revendication 4, dans lequel la buse est formée par une réduction de la section transversale dudit au moins un canal d'air (13).

6. Dispositif selon la revendication 1, dans lequel le réservoir (11) est relié par une conduite d'air (17) à un boîtier (10) du tambour de désagrégation ou du disque de désagrégation (6).

7. Semoir monograine comprenant un dispositif selon l'une quelconque des revendications précédentes.
